# EUROPÄISCHE PATENTSCHRIFT

(11) **EP 0 796 400 B1**
(45) Veröffentlichungstag und Bekanntmachung des Hinweises auf die Patenterteilung: **25.11.1998**
(21) Anmeldenummer: 95942092.8
(22) Anmeldetag: 09.12.1995
(51) Int. Cl.: F16H 3/093

(54) **UNTER LAST SCHALTBARES, MEHRGÄNGIGES WENDEGETRIEBE**
MULTISPEED POWERSHIFT REVERSING GEAR
TRANSMISSION REVERSIBLE A PLUSIEURS RAPPORTS COUPLABLE SOUS CHARGE

(30) Priorität: 16.12.1994 DE 4444843
(43) Veröffentlichungstag der Anmeldung: 24.09.1997
(73) Patentinhaber: ZF FRIEDRICHSHAFEN Aktiengesellschaft, 88038 Friedrichshafen (DE)
(72) Erfinder: REBHOLZ, Wolfgang, D-88045 Friedrichshafen (DE); LEBER, Fritz, D-88048 Friedrichshafen (DE)
(86) Internationale Anmeldenummer: EP9504859
(87) Internationale Veröffentlichungsnummer: WO9618834

(56) Entgegenhaltungen:
- DE-A- 4 242 941
- DE-A- 4 242 942
- DE-A- 4 416 930
- US-A- 5 249 475

## Beschreibung

Die Erfindung betrifft ein unter Last schaltbares, mehrgängiges Wendegetriebe mit einer Eingangswelle, Vorgelegewellen und Zahnrädern, die einen Antriebsrädersatz bilden sowie auf den Vorgelegewellen angeordneten Schaltkupplungen mit Losrädern, die zur Gang- und Richtungsschaltung wahlweise drehfest mit einer der Vorgelegewellen verbindbar sind sowie einer Abtriebsräderkette mit mindestens einem Festrad.

Bei den heute im Einsatz befindlichen Baumaschinen kommen Getriebe zur Anwendung, die im wesentlichen in zwei Gruppen unterteilt werden können. Kennzeichnend für eine Gruppe ist, daß dem Lastschaltgetriebe eine hydrostatische Antriebseinheit vorgeschaltet ist. Die Drehzahl- und Drehmomentanpassung der Vorschaltgruppe wird bei diesen Getrieben über hydraulische bzw. elektro-hydraulische Steuerungen realisiert.

Die überwiegende Anzahl der eingesetzten Getriebe gehört zu der weiteren Gruppe der Lastschaltgetriebe mit vorgeschaltetem, hydrodynamischen Drehmomentwandler. Mit Hilfe dieser Antriebseinheit läßt sich eine stufenlose und selbsttätige Drehmomentsteigerung bei anwachsendem Arbeitswiderstand des Kraftfahrzeuges, beispielsweise einer Baumaschine, erreichen. Es können hierbei Getriebeantriebsmomente erzeugt werden, die etwa dem dreifachen Wert des Motordrehmomentes entsprechen. Dies ist deswegen von Bedeutung, da, anders als dies beim Pkw der Fall ist, mit dem Getriebe bzw. Wandler gearbeitet wird. Bei einem Radlader wird beispielsweise die Schaufel in aufzunehmendes Erdreich hineingedrückt. Die Füllung wird losgebrochen und angehoben. Zum Beladen wird das Fahrzeug reversiert, die Schaufel wird weiter angehoben und entladen. Die Drehmomentwandlung ist ein großer Vorteil gerade bei geringen Geschwindigkeiten und großen Drehzahldifferenzen zwischen dem An- und Abtrieb.

Der Wandler kann durch eine Wandlerüberbrückungskupplung ergänzt werden. Mit Hilfe dieser Kupplung lassen sich im Bereich höherer Drehzahlen innerhalb der Gänge erhebliche Verbrauchseinsparungen erreichen.

Der Kraftfluß in den einzelnen Gängen wird durch eine Kombination von hydraulisch schaltbaren Kupplungen hergestellt. Diese Kupplungen müssen unter anderem zum Reversieren unter Last schaltbar sein und nehmen daher viel Energie auf. Die Bauweise des Gehäuses bzw. die Anordnung der Wellen des Getriebes muß einer Anwendung spezifisch angepaßt sein. Typische Anwendungsfälle für ein Wendegetriebe sind der Einsatz in Dumpern, Radladern, Baggerladern und Staplern, aber auch bei Fahrzeugen, die auf der Straße betrieben werden, zum Beispiel bei Kranfahrzeugen. Je nach Fahrzeugtyp ist ein bestimmter Achsversatz zwischen der Ein- und Ausgangswelle des Getriebes erforderlich. Lange Achsabstände sind beispielsweise dann einzuhalten, wenn die Beugungswinkel von Gelenkwellen klein gehalten werden müssen. In diesem Fall übernimmt das Wendegetriebe eine zusätzliche Funktion als Verteilergetriebe.

Bei Staplern hat das Wendegetriebe lediglich eine Ausgangswelle. Wegen der räumlichen Verhältnisse ist ein geringer Achsabstand erforderlich.

In den meisten Fällen ist mindestens ein motordrehzahlabhängig getriebener Nebenabtrieb, zum Beispiel für die Hydraulik der Arbeitsmaschine, erforderlich. Im Strang zum Nebenabtrieb ist ferner eine Schmiermittel- und Schaltpumpe vorgesehen, die ebenfalls in Abhängigkeit von der Motordrehzahl betrieben wird.

Durch die Bauart der Fahrzeuge bedingt, sind die Aufgaben, die ein Wendegetriebe zu erfüllen hat, sehr unterschiedlich.

Aus der DE-A 11 29 838 ist ein Wendegetriebe bekannt, das sich durch eine geringe axiale Baulänge auszeichnet. Auf einer Antriebswelle befindet sich ein Festrad, das mit Festrädern auf einer Umkehrwelle und einer Vorgelegewelle ständig im Eingriff steht. Sämtliche Losräder liegen auf einer Seite des Getriebes und kämmen ständig miteinander. Zwischen den Los- und Festrädern ist jeweils eine Reibungskupplung angeordnet. Bei diesem bekannten Wendegetriebe gestaltet sich der konstruktive Aufbau der Reibungskupplungen, insbesondere die Anordnung der Lamellenpakete, die Lagerung der Losräder auf den Vorgelegewellen und auch die auf der Seite der Losräder mittelbare Lagerung der Vorgelegewelle selbst relativ aufwendig.

Aus der DE-A 25 35 700 ist ein Wendegetriebe bekanntgeworden, das die Merkmale des ersten Teils des Patentanspruchs 1 aufweist.

Der vorliegenden Erfindung liegt, ausgehend von der DE-A 25 35 700, die Aufgabe zugrunde, ein lastschaltbares Wendegetriebe zu schaffen, das bei kleiner axialer Baulänge hinsichtlich der Antriebsübersetzungen, der möglichen Gangzahl und der erforderlichen Achsabstände unterschiedliche Varianten zuläßt.

Die der Erfindung zugrunde liegende Aufgabe wird mit einem Wendegetriebe gelöst, das neben den Merkmalen des ersten Teils des Anspruchs 1 auch die Merkmale des kennzeichnenden Teils aufweist.

Die vorgeschlagene Lösung ist in mehrfacher Hinsicht mit Vorteilen verbunden: Für jede Vorgelegewelle ist eine einzige Schaltkupplung vorgesehen. Hierdurch ergibt sich, selbst bei einem sechsgängigen Wendegetriebe, eine axial kurze Bauweise. Die Vorgelegewellen weisen aufgrund ihrer kurzen Baulänge eine geringe Durchbiegung auf. Sie können problemlos beidseitig in Wälzlagern im Getriebegehäuse gelagert werden. Die eingesetzten Losräder weisen jeweils einen einzigen Zahneingriff auf; sie werden nicht als Zwischenräder verwendet. Durch die konstanten Achsabstände bedingt, kann das Übersetzungsverhältnis des Antriebsrädersatzes zwischen den Richtungskupplungen Vorwärts und Rückwärts nicht geändert werden. Um dennoch eine Möglichkeit zu schaffen, unterschiedliche Übersetzungen in bezug auf eine weitere Richtungs- und/oder Gangschaltkupplung zu realisieren, ist ein weiteres Festrad auf der Eingangswelle vorgesehen. Dieses Festrad steht in ständig kämmender Verbindung mit einem Losrad, dem die erwähnte Schaltkupplung zugeordnet ist. Somit findet eine Entkoppelung von der Zähnezahl des Eingangszahnrades des Antriebsrädersatzes statt, so daß unterschiedliche Übersetzungen dargestellt werden können.

Vorteilhafte bauliche Ausgestaltungen sind den Unteransprüchen 2 bis 5 zu entnehmen.

Weitere, für die Erfindung wesentliche Merkmale sowie die daraus resultierenden Vorteile sind der nachfolgenden Beschreibung mehrerer Ausführungsbeispiele eines lastschaltbaren Wendegetriebes zu entnehmen.

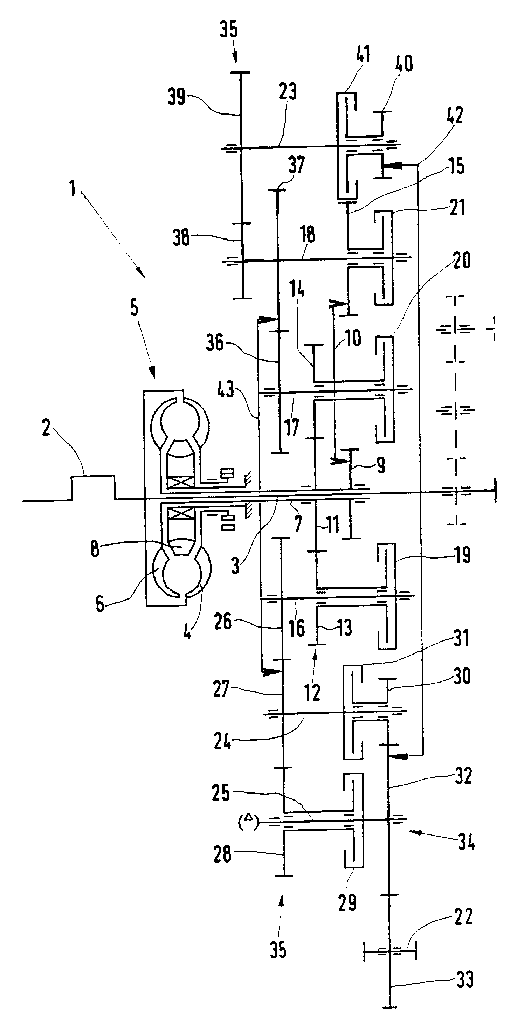

Die Figur zeigt ein Getriebeschema eines lastschaltbaren Wendegetriebes 1. Es handelt sich um ein Wendegetriebe mit maximal sechs Vorwärts- und drei Rückwärtsgängen. Ein schematisch angedeuteter Motor 2 treibt eine Eingangswelle 3 des Wendegetriebes. Die Eingangswelle 3 ist mit einem Pumpenrad 4 eines hydrodynamischen Drehmomentwandlers 5 drehfest verbunden. Ein Turbinenrad 6 des hydrodynamischen Drehmomentwandlers überträgt die Antriebsleistung auf eine Hohlwelle 7, die konzentrisch zur Eingangswelle 3 liegt.

Der hydrodynamische Drehmomentwandler 5 wird durch ein Leitrad 8 vervollständigt, das über einen Freilauf abstützbar ist.

Auf der Hohlwelle 7 ist ein Festrad 11 drehfest angeordnet, das das Eingangsrad eines Antriebsrädersatzes 12 bildet. Zu diesem Antriebsrädersatz 12 zählen Losräder 13 und 14. Das Festrad 11 steht in ständigem Zahneingriff mit diesen Losrädern 13 und 14. Die Losräder 13 und 14 sind jeweils auf einer Vorgelegewelle 16 und 17 gelagert.

Dem Losrad 13 ist eine Schaltkupplung 19 und dem Losrad 14 eine Schaltkupplung 20 zugeordnet.

Auf der Hohlwelle 7 ist ein weiteres Festrad 9 drehfest angeordnet, das mit einem Losrad 15 in ständigem Zahneingriff steht.

Das Losrad 15 ist auf einer Vorgelegewelle 18 gelagert. Ihm ist eine Schaltkupplung 21 zugeordnet.

Durch die beiden Festräder 11 und 9 wird neben dem Antriebsrädersatz 12 eine unabhängige Antriebskette, bestehend aus dem Festrad 9 und dem Losrad 15, gebildet. Bei konstanten Achsabständen kann das Übersetzungsverhältnis innerhalb des Antriebsrädersatzes 12 zwischen der Schaltkupplung 19 und der Schaltkupplung 20 nicht geändert werden. Die unabhängige Antriebskette eröffnet die Möglichkeit, unterschiedliche Übersetzungen, bezogen auf die Schaltkupplung 21, zu schaffen, die unabhängig von der Übersetzung des Antriebsrädersatzes 12 sind. Für den Antrieb der Schaltkupplung 20 tritt demnach eine Entkoppelung von der Zähnezahl des Festrades 11 des Antriebsrädersatzes 12 ein.

Bei geschlossener Schaltkupplung 19 ist das Losrad 13 drehfest mit der Vorgelegewelle 16 verbunden. Das Losrad 14 ist an die Vorgelegewelle 17 gekoppelt, wenn die Schaltkupplung 20 betätigt ist. Ist die Schaltkupplung 21 geschlossen, besteht eine drehfeste Verbindung zwischen dem Losrad 15 und der Vorgelegewelle 18. Die Schaltkupplungen 19, 20 und 21 erlauben eine Umkehr der Drehrichtung einer Ausgangswelle 22 des Wendegetriebes 1. Aus diesem Grunde werden die Schaltkupplungen 19, 20 und 21 auch als Richtungskupplungen bezeichnet.

Neben den Vorgelegewellen 16, 17 und 18 sowie der Ausgangswelle 22 weist das Wendegetriebe weitere Vorgelegewellen 23, 24 und 25 auf.

Auf der Vorgelegewelle 16 ist neben dem Losrad 13 ein Festrad 26 angeordnet. Das Festrad 26 steht mit einem Festrad 27 der Vorgelegewelle 24 in ständigem Zahneingriff. Das Festrad 27 kann die Funktion eines Zwischenrades übernehmen. Auf der Vorgelegewelle 25 ist ein Losrad 28 gelagert, das mit dem Festrad 27 der Vorgelegewelle 24 im Eingriff steht. Dem Losrad 28 ist eine Schaltkupplung 29 zugeordnet, über die das Losrad 28 drehfest mit der Vorgelegewelle 25 verbunden werden kann.

Auf der Vorgelegewelle 24 ist ein Losrad 30 drehbar gelagert. Das Losrad 30 kann mit Hilfe einer weiteren Schaltkupplung 31 drehfest mit dem Festrad 27 verbunden werden.

Bei geschlossener Schaltkupplung 31 fließt die Antriebsleistung über das Losrad 30 auf ein Festrad 32 der Vorgelegewelle 25.

Auf der Ausgangswelle 22 des Wendegetriebes ist ein Festrad 33 angeordnet, das mit dem Festrad 32 der Vorgelegewelle 25 in ständiger Antriebsverbindung steht.

Das Losrad 30 und die Festräder 32 und 33 bilden eine Abtriebsräderkette 34.

Die Festräder 26, 27 und das Losrad 28 zählen zu einem Verteilerrädersatz 35, der durch ein weiteres Festrad 36 der Vorgelegewelle 17, zwei Festräder 37 und 38 der Vorgelegewelle 18 und ein Festrad 39 der Vorgelegewelle 23 vervollständigt wird.

Auf der Vorgelegewelle 23 befindet sich ein Losrad 40, das über eine Schaltkupplung 41 drehfest mit der Vorgelegewelle 23 verbunden werden kann. Das Losrad 40 steht in ständigem Zahneingriff mit dem Festrad 32, was durch eine Linie 42 angedeutet ist. Das Losrad 40 zählt somit zur Abtriebsräderkette 34.

Das Festrad 27 steht mit dem Festrad 37 des Verteilerrädersatzes 35 im Eingriff, was durch die eingezeichnete Linie 43 kenntlich gemacht ist. Das Losrad 15 der Vorgelegewelle 18 kämmt mit dem Festrad 9, was aus der eingezeichneten Linie 10 hervorgeht.

Die Schaltkupplungen 41, 31 und 29 dienen, neben den erwähnten Richtungskupplungen, der Gangschaltung und werden als Gangkupplungen bezeichnet. In jedem Gang sind je eine Richtungs- und eine Gangkupplung geschlossen.

Aus dem bisher erläuterten Aufbau des Wendegetriebes 1 geht hervor, daß die Vorgelegewellen 16 und 17 jeweils ein Losrad 13 und 14 des Antriebsrädersatzes 12 und je ein Festrad 26 und 36 des Verteilerrädersatzes 35 aufweisen.

Die Schaltkupplung 21 ist sowohl Richtungs- und Gangschaltkupplung. Auf der Vorgelegewelle 18 sind neben dem Losrad 15 die Festräder 37 und 38 des Verteilerrädersatzes gelagert. Die Drehzahl und die Drehrichtung sämtlicher Zahnräder des Verteilerrädersatzes 35 wird bei Betätigung einer der Richtungskupplungen 19, 20 und 21 definiert.

Die Vorgelegewellen 23, 24 und 25, auf denen die Schaltkupplungen 41, 31 und 29 (Gangkupplungen) angeordnet sind, nehmen je ein Festrad 39, 27 und ein Losrad 28 des Verteilerrädersatzes 35 sowie jeweils ein Losrad 40, 30 und ein Festrad 32 der Abtriebsräderkette 34 auf. Wird das Wendegetriebe 1 in einer Viergang-Version betrieben, gelten folgende Verhältnisse:

| Gang | geschaltete Kupplungen |
|---|---|
| 1 | 19 und 41 |
| 2 | 19 und 31 |
| 3 | 19 und 29 |
| 4 | 21 und 29 |
| 1R | 20 und 41 |
| 2R | 20 und 31 |
| 3R | 20 und 29 |

Für eine Sechsgang-Version, bei der die Schaltkupplungen 19 und 21 als sogenannte Split-Kupplungen eingesetzt werden, gelten folgende Verhältnisse:

| Gang | geschaltete Kupplungen |
|---|---|
| 1 | 19 und 41 |
| 2 | 21 und 41 |
| 3 | 19 und 31 |
| 4 | 21 und 31 |
| 5 | 19 und 29 |
| 6 | 21 und 29 |
| 1R | 20 und 41 |
| 2R | 20 und 31 |
| 3R | 20 und 29 |

### Bezugszeichen

- 1: Wendegetriebe
- 2: Motor
- 3: Eingangswelle
- 4: Pumpenrad
- 5: Drehmomentwandler
- 6: Turbinenrad
- 7: Hohlwelle
- 8: Leitrad
- 9: Festrad
- 10: Linie
- 11: Festrad
- 12: Antriebsrädersatz
- 13: Losrad
- 14: Losrad
- 15: Losrad
- 16: Vorgelegewelle
- 17: Vorgelegewelle
- 18: Vorgelegewelle
- 19: Schaltkupplung
- 20: Schaltkupplung
- 21: Schaltkupplung
- 22: Ausgangswelle
- 23: Vorgelegewelle
- 24: Vorgelegewelle
- 25: Vorgelegewelle
- 26: Festrad
- 27: Festrad
- 28: Losrad
- 29: Schaltkupplung
- 30: Losrad
- 31: Schaltkupplung
- 32: Festrad
- 33: Festrad
- 34: Abtriebsräderkette
- 35: Verteilerrädersatz
- 36: Festrad
- 37: Festrad
- 38: Festrad
- 39: Festrad
- 40: Losrad
- 41: Schaltkupplung
- 42: Linie
- 43: Linie

## Patentansprüche

1. Unter Last schaltbares, mehrgängiges Wendegetriebe (1) mit mindestens einer Eingangswelle (3, 7) und Vorgelegewellen (16, 17, 18, 23, 24 und 25) und Zahnrädern (11, 13 und 14), die einen Antriebsrädersatz (12) bilden sowie auf den Vorgelegewellen angeordneten Schaltkupplungen (19, 20, 21, 29, 31 und 41) mit Losrädern (13, 14, 15), die zur Gang- und Richtungsschaltung wahlweise drehfest mit einer der Vorgelegewellen verbindbar sind sowie einer Abtriebsräderkette (34) mit mindestens einem Festrad (32), dadurch **gekennzeichnet**, daß auf jeder Vorgelegewelle (16, 17, 18, 23, 24 und 25) eine einzige Schaltkupplung (19, 20, 21, 29, 31 und 41) angeordnet ist, daß ein Festrad (11) und mit diesem in ständigem Eingriff befindliche Losräder (13, 14) einen Antriebsrädersatz (12) bilden und ein weiteres Festrad (9) mit einem Losrad (15) eine vom Antriebsrädersatz (12) entkoppelte Antriebskette bilden, wobei beide Festräder (11 bzw. 9) auf der Eingangswelle (7) befestigt sind, daß ein auf einer Vorgelegewelle (25) angeordnetes Festrad (32) mit zwei Losrädern (30, 40) in ständigem Eingriff steht und eine Abtriebsräderkette (34) bilden und daß die Vorgelegewellen (16, 17, 18, 23, 24 und 25) durch Festräder (26, 27, 36, 37, 38 und 39) und ein Losrad (28), die einen Verteilerrädersatz (35) bilden, miteinander verbunden sind.

2. Unter Last schaltbares, mehrgängiges Wendegetriebe (1) nach Anspruch 1, dadurch **gekennzeichnet**, daß dem Losrad (15) eine als Richtungskupplung und/oder Gangschaltkupplung eingesetzte Schaltkupplung (21) zugeordnet ist.

3. Unter Last schaltbares, mehrgängiges Wendegetriebe (1) nach den Ansprüchen 1 und 2, dadurch **gekennzeichnet**, daß die Schaltkupplung (21) mit dem Losrad (15) auf der Vorgelegewelle (18) angeordnet ist.

4. Unter Last schaltbares, mehrgängiges Wendegetriebe (1) nach den Ansprüchen 1 bis 3, dadurch **gekennzeichnet**, daß die Vorgelegewelle (18) zwei Festräder (37 und 38) des Verteilerrädersatzes (35) aufweist.

5. Unter Last schaltbares, mehrgängiges Wendegetriebe (1) nach den Ansprüchen 1 bis 4, dadurch **gekennzeichnet**, daß die Festräder (11, 9) auf einer konzentrisch zu der Eingangswelle (3) liegenden Hohlwelle (7) angeordnet sind.

6. Unter Last schaltbares, mehrgängiges Wendegetriebe (1) nach den Ansprüchen 1 bis 5, dadurch **gekennzeichnet**, daß die dem Losrad (15) zugeordnete Schaltkupplung (21) zum Schalten des vierten Ganges dient.

## Claims

1. Change-under-load, multispeed reversing gear (1) with at least one input shaft (3, 7), countershafts (16, 17, 18, 23, 24 and 25) and gearwheels (11, 13 and 14) , which form a drive wheel set (12), as well as clutches (19, 20, 21, 29, 31 and 41), disposed on the countershafts, with idler wheels (13, 14, 15) which, in order to change speed and direction, can be selectively connected in a torsion-proof manner to one of the countershafts, and a driven wheel chain (34) with at least one fixed wheel (32),
characterised in that a single clutch (19, 20, 21, 29, 31 and 41) is disposed on each countershaft (16, 17, 18, 23, 24 and 25), that a fixed wheel (11) and idler wheels (13, 14) , which are constantly in mesh with the latter, form a drive wheel set (12), and a further fixed wheel (9) forms with an idler wheel (15) a drive chain which is disengaged from the drive wheel set (12), wherein the two fixed wheels (11 and 9) are secured to the input shaft (7), that a fixed wheel (32) disposed on a countershaft (25) is constantly in mesh with two idler wheels (30, 40), with which it forms a driven wheel chain (34), and that the countershafts (16, 17, 18, 23, 24 and 25) are connected together via fixed wheels (26, 27, 36, 37, 38 and 39) and an idler wheel (28), which form a distributor wheel set (35).

2. Change-under-load, multispeed reversing gear (1) according to claim 1, characterised in that a clutch (21), which is used as a directional clutch and/or speed-chance clutch, is associated with the idler wheel (15).

3. Change-under-load, multispeed reversing gear (1) according to claims 1 and 2, characterised in that the clutch (21) is disposed with the idler wheel (15) on the countershaft (18).

4. Change-under-load, multispeed reversing gear (1) according to claims 1 to 3, characterised in that the countershaft (18) comprises two fixed wheels (37 and 38) of the distributor wheel set (35).

5. Change-under-load, multispeed reversing gear (1) according to claims 1 to 4, characterised in that the fixed wheels (11, 9) are disposed on a hollow shaft (7) extending concentrically with the input shaft (3).

6. Change-under-load, multispeed reversing gear (1) according to claims 1 to 5, characterised in that the clutch (21) associated with the idler wheel (15) serves to engage fourth gear.

## Revendications

1. Transmission réversible (1) à engrenages multiples manoeuvrable en charge comportant au moins un arbre d'entrée (3, 7) et des arbres intermédiaires (16, 17, 18, 23, 24 et 25) et des roues dentées (11, 13 et 14) formant un ensemble de pignons menants (12) ainsi que des embrayages (19, 20, 21, 29, 31 et 41) agencés sur les arbres intermédiaires et comportant des roues mobiles (13, 14, 15) pouvant être reliées de façon non rotative pour l'enclenchement des vitesses et des embrayages directionnels au choix avec un des arbres intermédiaires ainsi qu'avec une chaîne de roues de sortie (34) avec au moins une roue fixe (32), **caractérisée** en ce que sur chaque arbre intermédiaire (16, 17, 18, 23, 24 et 25) est agencé un seul embrayage (19, 20, 21, 29. 31 et 41), en ce qu'une roue fixe (11) et des roues mobiles (13, 14) s'y engrenant en permanence forment un ensemble ce pignons menants (12) et une autre roue fixe (9) formant avec une roue mobile (15) une chaîne d'entraînement découplée de l'ensemble des pignons menants (12), les deux roues fixes (11, respectivement 9) étant fixées sur l'arbre d'entrée (7), en ce qu'une roue fixe (32) agencée sur un arbre intermédiaire (25) se trouve en engrènement permanent avec deux roues mobiles (30, 40), formant une chaîne de roues de sortie (34), et en ce que les arbres intermédiaires (16, 17, 18, 23, 24 et 25) sont reliés entre eux par des roues fixes (26, 27, 36, 37, 38 et 39 ) et une roue mobile (28) formant un ensemble de roues distributrices (35).

2. Transmission réversible (1) à engrenages multiples manoeuvrable en charge selon la revendication 1, **caractérisée** en ce qu'à la roue mobile (15) est affecté un embrayage (21) utilisé comme embrayage directionnel et/ou embrayage de changement de vitesse.

3. Transmission réversible (1) à engrenages multiples manoeuvrable en charge selon les revendications 1 et 2, **caractérisée** en ce que l'embrayage (21) est agencé avec la roue mobile (15) sur l'arbre intermédiaire (18).

4. Transmission réversible (1) à engrenages multiples manoeuvrable en charge selon les revendications 1 à 3, **caractérisée** en ce que l'arbre intermédiaire (18) comporte deux roues fixes (37 et 38) de l'ensemble des roues distributrices (35).

5. Transmission réversible (1) à engrenages multiples manoeuvrable en charge selon les revendications 1 à 4, **caractérisée** en ce que les roues fixes (11, 9) sont agencées sur un arbre creux (7) en position concentrique par rapport à l'arbre d'entrée (3).

6. Transmission réversible (1) à engrenages multiples manoeuvrable en charge selon les revendications 1 à 5, **caractérisée** en ce que l'embrayage (21) affecté à la roue mobile (15) sert à l'enclenchement de la quatrième vitesse.
